Europäisches Patentamt

(19) European Patent Office

Office européen des brevets

(11) Publication number: **0 099 151**
**A2**

## (12) EUROPEAN PATENT APPLICATION

(21) Application number: 83200959.1

(22) Date of filing: 28.06.83

(51) Int. Cl.³: **B 29 C 17/02**

(30) Priority: 12.07.82 US 397533

(43) Date of publication of application:
25.01.84 Bulletin 84/4

(84) Designated Contracting States:
AT BE CH DE FR GB IT LI LU NL SE

(71) Applicant: WESTERN PLASTICS CORPORATION
2330 Port of Tacoma Road P.O. Box 1758
Tacoma Washington 98401(US)

(72) Inventor: Olsson, Robert Pengra

Renton Washington(US)

(74) Representative: Hulse, Thomas Arnold
Hulse & Co. Cavendish Buildings West Street
Sheffield S1 1ZZ(GB)

(54) Mandrel for forming a socket in a plastics pipe.

㊒ A belling mandrel assembly (20) for forming in the end of a plastics pipe (22) a belled socket with an annular seal pocket therein has a lip mould (54) for forming the lip of the socket, a base mould (56) for forming the base of the socket, and a plurality of form block segments (58) mounted between them. Upon the application of pressure between the lip mould (54) and the base mould (56), the form block segments (58) expand to form an annular ring for moulding an annular seal pocket in the socket. Upon widening the distance between the lip mould (54) and the base mould (56) in the form block segments (58) are retracted by levers (68) and springs (76) to allow the mandrel to be withdrawn from the belled socket.

Fig. 5

EP 0 099 151 A2

Croydon Printing Company Ltd.

MANDREL ASSEMBLY FOR FORMING A BELLED SOCKET
IN A PLASTICS PIPE

This invention relates to plastics pipe forming apparatus, and more particularly to a mandrel assembly for forming a belled socket in the end of a pipe, the socket being formed with an annular seal pocket.

A common method for joining pipe sections end to end is to provide on one end of each pipe section a socket sized to receive the straight end of the adjoining pipe section. To provide a fluid-tight fit, it also is common practice to locate a seal member between the two pipe sections.

This is done by providing an annular space or pocket within the belled socket into which a seal member may be placed. The seal member is located in such a manner that upon inserting the adjoining pipe section the seal member abuts both pipe sections and thus is secured in place.

In this manner it is also possible to allow a degree of freedom in the fit of the sections, so that the alignment of the joint need not be exact. Also, the pipeline may expand or contract, without affecting the effectiveness of the seal.

The use of this type of joint is particularly common in plastics pipelines. Accordingly, a number of devices of the same general classification as that of the presently disclosed device have been employed to produce belled sockets on the ends of plastics pipe sections.

Some of the prior art devices mould the exterior of the socket. Since the pipe wall is of a predetermined thickness, such a socket is formed on the inside of the pipe. However, this type of apparatus cannot be relied upon to produce a product of close tolerances because of differences in wall thickness and other factors. Accordingly, with this type of manufacture, the joints are prone to leak. Moreover, a separate mould is required for each different pipe wall thickness since the interior size of the socket must remain the same.

Other prior art devices have internal moulding mandrels. The problem encountered with an internal moulding mandrel is one of forming the annular seal pocket in the socket. The moulding apparatus includes an annular

-3-

ring, the seal-pocket-moulding parts of which must be retracted into the mandrel before it can be withdrawn from the pipe; else the lip of the pipe will be destroyed upon separation of the pipe from the mandrel.

The apparatus for extending and retracting the segments of the mandrel forming the annular ring in the prior art devices is complex and prone to malfunction. Some such devices include pivoted segments which must be extended in a specified order. Others have segments which are collapsible upon rotation.

Accordingly, it is the general object of the present invention to provide a belling mandrel assembly for enlarging and forming a belled socket on the end of a plastics pipe.

Another object is to provide a belling mandrel assembly of simple construction, having moving parts which function repeatedly without malfunction.

A further object is to provide component parts which have very large bearing surface areas.

Yet another object is to provide a belling mandrel frame and drive assembly which is simple and rugged in construction.

-4-

A still further object is to provide a belling mandrel assembly which is accurate, simple, rugged and the design for which may be scaled up or down for use in a wide range of pipe sizes.

These and other objects and advantages of the present invention, and the manner in which they are achieved will be made apparent in the following specification and claims.

According to the present invention, a belling mandrel assembly for enlarging the end of a plastics pipe and forming a belled socket with an annular seal pocket therein comprises

a)   a frame;

b)   socket moulding means mounted on the frame and comprising:

1)   a lip mould attached to the frame and having an outer surface configured and dimensioned for coaxial engagement with the pipe to enlarge and mould the lip thereof,

2)   a base mould mounted coaxially with the lip mould for coaxial engagement with the pipe and having an outer surface configured and dimensioned to enlarge and mould the base of a socket therein, and

3)   a plurality of form block segments mounted between the lip mould and the base mould and slidably engaging the end surfaces thereof, the form block segments being configured and dimensioned to move radially outwardly from a first position to a second position when pressed between the lip mould and the base mould, the form block segments being recessed within the area defined by a geometrical extension of the outer surface of the lip mould when in' the first position, and forming a continuous annular bead configured to mould an annular seal pocket in the socket of the pipe when in the second position;

c) shifting means mounted on the frame and extending through the lip' mould and carrying the base mould, the shifting means being operable to reciprocate the base mould axially relative to the lip mould, to vary the distance between the lip mould and the base mould, thus being operable, upon decreasing the distance between the lip mould and the base mould, to press the form block segments between the lip mould and the base mould causing the form block segments to move radially outwardly from the first position to the second position; and

-6-

d) retracting means engaging the form block segments for retracting the form block segments from the second position to the first position when the distance between the lip mould and the base mould is increased by operation of the shifting means.

A preferred embodiment of the invention will now be described, by way of example only, with reference to the accompanying drawings, in which:-

Figure 1 is a side elevation of a belling mandrel assembly in accordance with the present invention illustrating, in solid lines, a partially extended position, and, in broken lines, a retracted position;

Figure 2 is a side elevation similar to Figure 1 illustrating the assembly in a fully extended position;

Figure 3 is an enlarged transverse section of the assembly, taken along the line III-III of Figure 2;

Figure 4 is a section taken along the line IV-IV of Figure 3;

Figure 5 is a section similar to Figure 4, but illustrating the assembly in the position shown in Figure 1, a pipe having been

-7-

formed over the assembly;

Figure 6 is a top perspective view of a lever component within the assembly;

Figure 7 is a partial section taken along the line VII-VII of Figure 4 illustrating a pair of form block segments, in their extended position;

Figure 8 is a view of the form block segments looking in the direction of the line VIII-VIII of Figure 7;

Figure 9 is another view of the form block segments, looking in the direction of the line IX-IX of Figure 7;

Figure 10 is a partial section taken along the line X-X of Figure 5 illustrating a pair of form block segments in their retracted position; and

Figure 11 is a view of the form block segments looking in the direction of the line XI-XI of Figure 10.

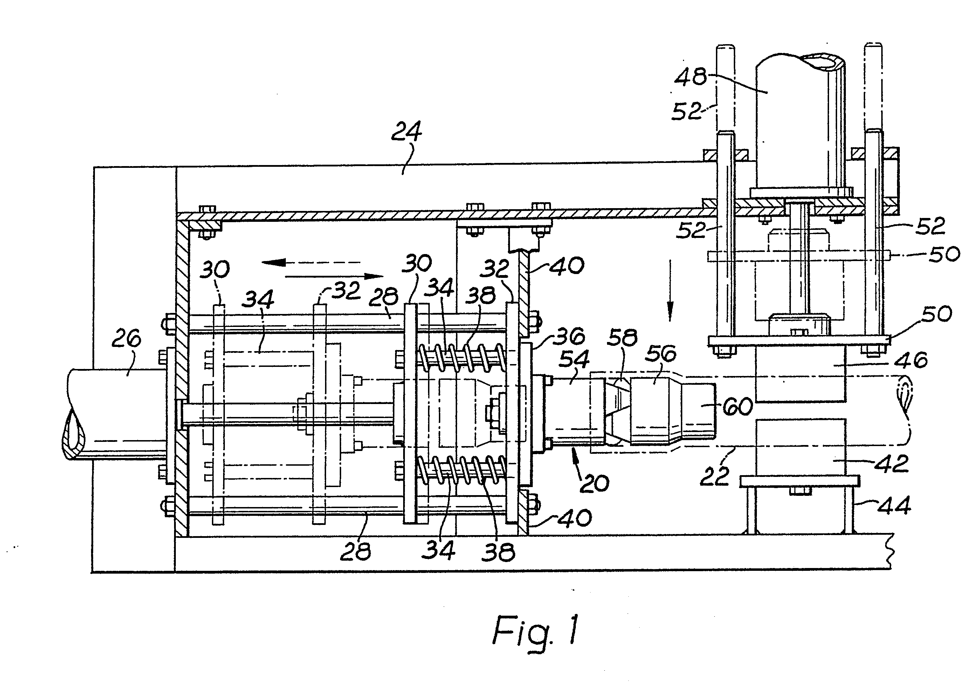

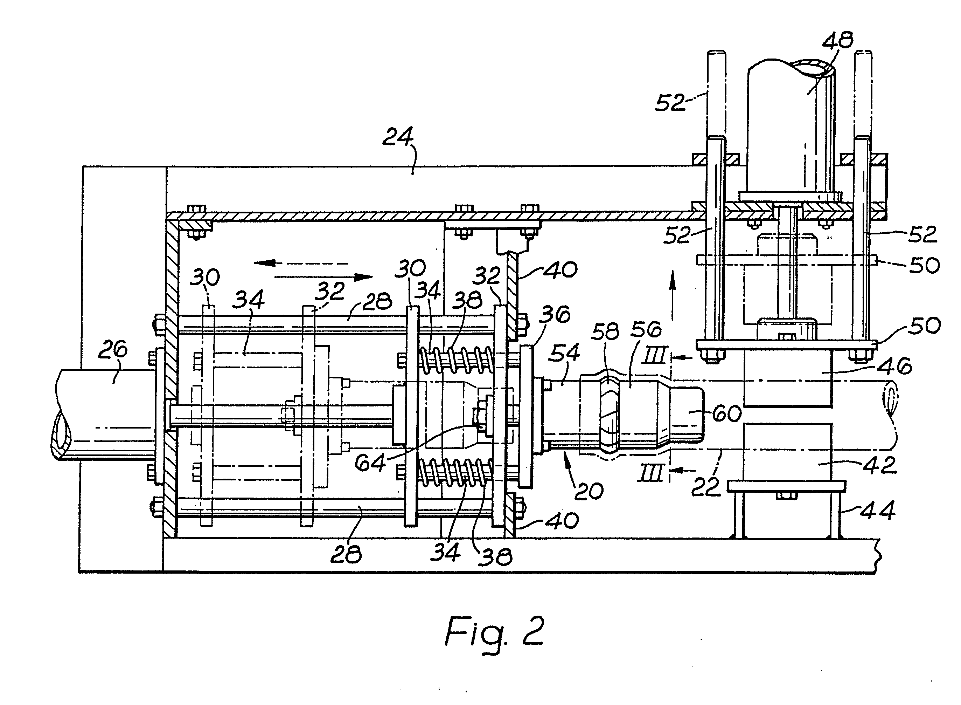

A belling mandrel assembly in accordance with the present invention, is illustrated generally in Figures 1 and 2.

A mandrel assembly, indicated generally at 20, is shown engaging the end of a plastics pipe indicated by broken lines 22,

-8-

with the object of forming a belled socket therein. The retracted position of the mandrel is shown in broken lines. A frame including a stationary support 24 carries drive means for reciprocating the mandrel. The drive means includes a fluid operated cylinder 26 (preferably hydraulic) mounted on the support. A plurality of longitudinal rods 28 are attached to the support 24 and form a track. A carriage for the mandrel 20 is mounted on the track to slide longitudinally, in line with the axis of the hydraulic cylinder 26. The carriage includes two spaced apart plates 30 and 32 which have holes therein slidably receiving the track rods 28. Longitudinal spacer rods 34 are attached to the plate 30 and extend forwardly through holes in the plate 32. They are attached to a mounting plate 36 and springs 38 on each of the spacer rods bias the plates 30 and 32 apart, the springs being kept in compression even at the widest spacing of the plates 30 and 32, by the mounting plate 36 abutting the forward plate 32. The shaft of the reciprocating drive cylinder 26 is connected to the rearward plate 30, thereby providing drive means for reciprocating the carriage along the track. Carriage stop means is provided on the track, in the form of stop plates 40, which also carry the ends of the rods 28. The forward plate 32 abuts these stops when the carriage is in its forward position. The cylinder 26 drives the carriage until the forward plate 32 contacts the stops 40 (Figure 1), and then drives the remainder of the carriage, including the rearward plate 30, the spacer rods 34, and the mounting plate 36, forward still more (Figure 2). This compresses the springs 38 and produces a gap between the forward plate 32 and the mounting plate 36.

A pipe clamping means is provided for holding the pipe 22 in a position to be engaged by the mandrel 20. The pipe clamping means comprises a bottom jaw 42 carried by a bracket 44, and a top jaw 46 which is supported by and movable with a reciprocating cylinder 48. To ensure proper alignment, a bracket 50 attached to the top jaw carries guide rods 52 which extend through holes in the frame.

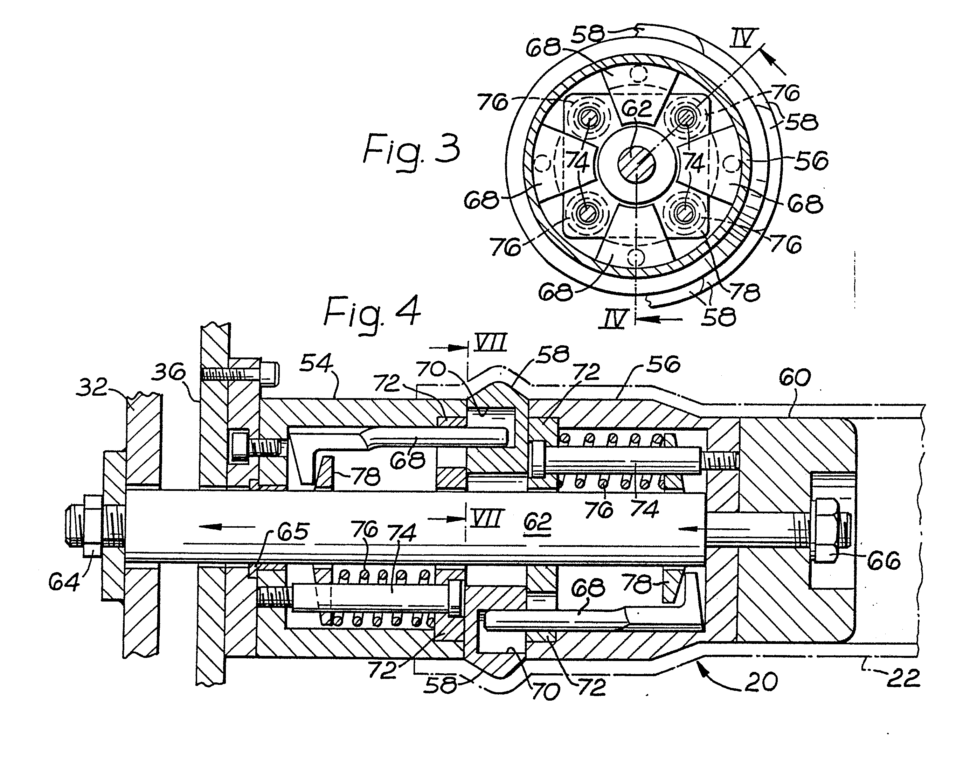

Now considering more specifically the construction and manner of operation of the mandrel 20, reference is made to Figures 3, 4, and 5.

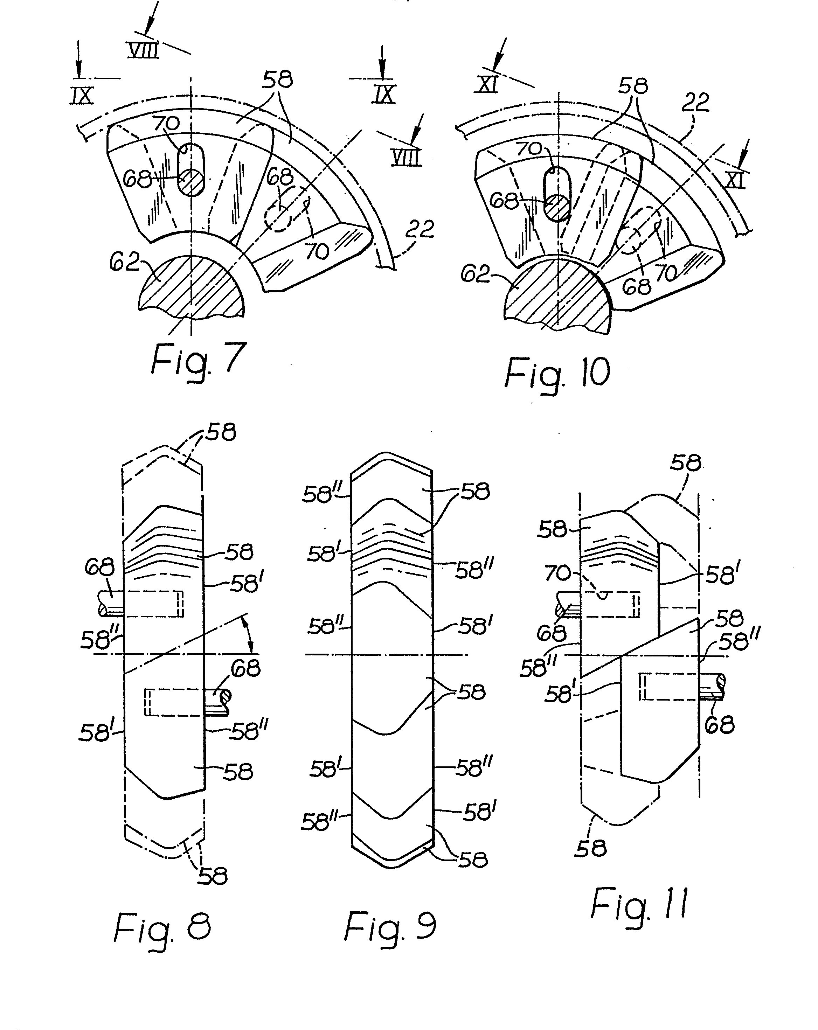

The mandrel comprises socket moulding means including a lip mould 54, which is attached to the mounting plate 36, a base mould 56 mounted coaxially with the lip mould, and a plurality of form block segments 58 mounted between the lip mould and the base mould. The lip mould 54 is of cylindrical configuration, its outside surface diameter being larger than the inside diameter of the pipe 22 to be moulded. It is configured and dimensioned for coaxial engagement with the pipe to enlarge and mould the lip, or end portion, thereof. The lip mould is bolted to the mounting plate in a manner well known to those skilled in the art. It is hollow, and contains a portion of the seal pocket-forming mechanism to be hereinafter discussed. Its free end includes a bearing surface, against which other parts of the mechanism slide. The base mould 56 is mounted coaxially with the lip mould for coaxial engagement with the pipe and its outer surface is configured and dimensioned to enlarge and mould the base of the pipe socket. The forward end of the base mould 56 is tapered to facilitate enlargement of the pipe 22. A pilot 60, attached to the base mould, starts the mandrel into the pipe. As with the lip mould, the base mould is hollow to contain parts of the working assembly. Also, the end surface, facing the lip mould, forms a bearing surface similar to that formed by the opposing end of the lip mould. A plurality of form block segments 58 are mounted between the lip mould and the base mould. These segments form the seal pocket in the pipe socket. Each form block segment is a section of an annular ring, composed of an assembly of similar segments. Each of the form block segments has radial sides, but as can best be seen in Figure 8, the sides are angled with respect to the longitudinal axis of the mandrel. The sides of each segment are angled oppositely. Thus, as can best be seen in Figure 9, each segment has a short face 58' and an opposing long face 58" forming a compound wedge-shaped section. The segments, each being similar in configuration, are alternated to form the annular ring.

The assembly and mode of operation of the form block segments 58 are illustrated in Figures 7 to 11.

The form block segments bear against eachother along their radial edges. Their long faces 58" bear against the end surfaces of lip mould 54 and base mould 56. They are configured and dimensioned to move radially outwardly from a first position to a second position when pressed between the lip mould and the base mould. In the first or retracted position, shown in Figures 1, 5, 10 and 11, the segments are withdrawn within the area defined by a geometrical extension of the outer surface of the lip mould or the base mould. Thus the pipe 22 can be pushed over, or removed from, the mandrel without obstruction by the form block segments.

Figures 2 to 4 and 7 to 9 illustrate the second or expanded position of form block segments 58. In these views the form block segments are expanded to form a continuous, annular ring having an outside surface forming a bead of a diameter larger than either the lip mould 54 or the base mould 56, in order to mould a seal pocket in the socket of the pipe 22. The top or outer surfaces of the form block segments have the form of the desired configuration of the seal pocket, which they determine. Preferably, the surface is curved smoothly and is continuous with the outside surfaces of the lip mould and the base mould.

Since the radial sides of the form block segments 58 are angled, and they are alternated in orientation, pressing the form block segments between the lip mould 54 and the base mould 56 causes them to expand to form the annular ring of their second or expanded position. Conversely, increasing the distance between the lip mould and the base mould allows the form block segments to retract to their first or retracted position.

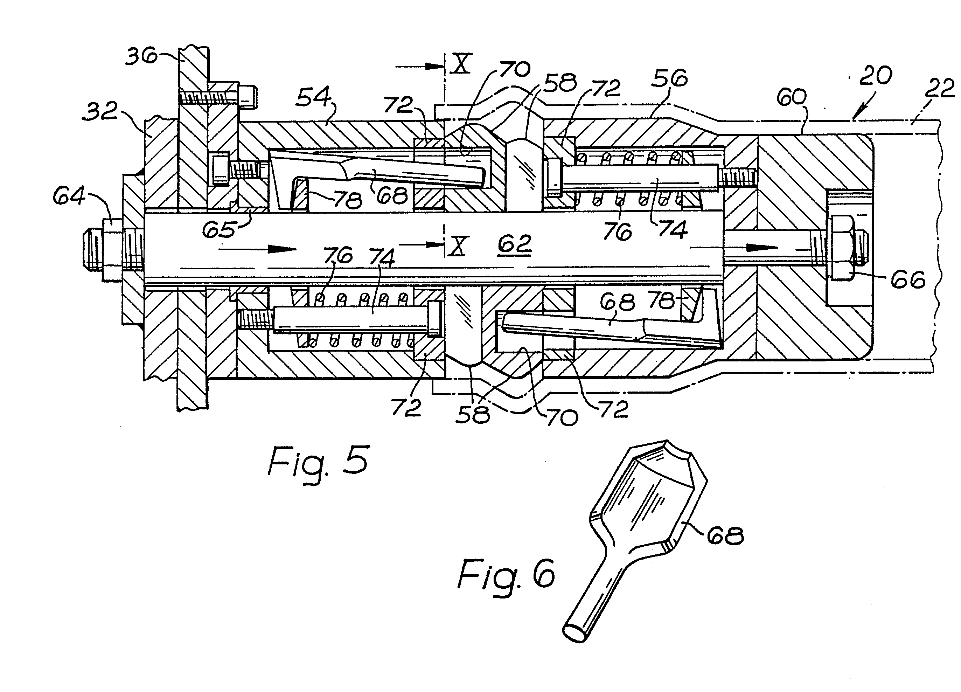

Shifting means is provided in the form of a shift rod 62. The shift rod is mounted on the frame, secured to the forward plate 32 by a nut 64. It passes freely through the mounting plate 36 and through a bushing 65 in the lip mould 54, and carries the base mould 56. The pilot 60 is also secured to the base mould and the shift rod by a nut 66. The shift rod 62 is operable to reciprocate the base mould axially relative to the lip mould, to vary the distance between the lip mould and the base mould. When the shift rod is moved relatively to the left, from the position of Figure 5 to the position of Figure 4, the form block segments 58 are pressed between the lip mould and the base mould and move radially outwardly from their first position to their second position. The hollow inside of the lip mould 54 and the base mould 56 houses retracting means for retracting the form block segments 58 from the second position to the first position. When the hydraulic cylinder 26 is activated to retract the mandrel, the first action decreases the gap between the forward plate 32 and the mounting plate 36. Through the action of the shift rod 62, this increases the distance between the lip mould and the base mould. The form block segments are no longer pressured outwardly, and accordingly retract. The retracting means includes angle levers 68 (see particularly Figure 6) one associated with each form block segment 58. As shown in Figure 4, each lever engages a hole 70 in the respective form block segment and restricts further outward movement of the segment. Each lever is operable to pivot at its angle to pull the associated form

-15-

block segment inwardly. The outside of the
end of each lever is bevelled to accommodate
this angular movement, as shown in Figure 5.
A spring abutment 72 is mounted in each of the
inside ends of the lip mould 54 and the base
mould 56 by bolts 74. The spring abutments
provide additional bearing surfaces on the
ends of the lip mould and the base mould. A
spring 76 around each bolt abuts the spring
abutment. The other end of the spring abuts a
spring plate 78 which is mounted slidably
within the socket moulding means. The spring
plate 78 abuts not only the spring, but also
the angle levers 68. As the springs are kept
in compression, this continuously biases the
form block segments 58 inwardly.

As shown by Figure 3, eight is the
preferred number of form block segments 58.
Accordingly, four angle levers 68 and four
springs 76 are mounted within each end of the
socket moulding means. The springs are out of
alignment one-eighth of a rotation from the
levers. The biasing force of the springs is
transferred to the levers through the spring
plate.

A length of pipe 22 is moved into position for engagement by the mandrel 20 and is secured by the jaws 42 and 46. Its end is pre-heated to allow the mandrel to enter and expand it to form the belled socket. The hydraulic cylinder 26 drives the carriage to bring the mandrel 20 into engagement with the pipe. The pilot 60 assures alignment and the plastic pipe enlarges as it flows around the taper on the outer surface of the base mould 56. The forward plate 32 contacts the stops 40, which also stops the forward travel of the base mould 56. The springs 34 and the springs 76 are compressed as the lip mould 54 continues to move forwardly. As the distance between the lip mould and the base mould decreases the form block segments 58 are pressed outwardly. As the lip mould 54 reaches its limit of travel the form block segments 58 are fully extended to form the annular seal pocket. In this position the pipe 22 is allowed to cool. When the pipe is cool enough, the hydraulic cylinder 26 begins to retract the mandrel 20. As a first action the gap between the forward plate 32 and the mounting plate 36 closes. This widens the space between the lip mould 54 and the base mould 56 and allows the form block segments 58
to be retracted.  The retracted position of
the form block segments is within the cross-
sectional area of the lip of the pipe.  Thus,
the entire mandrel may then be removed from
the newly formed belled socket.

0099151

-18-

CLAIMS

1. A belling mandrel assembly (20) for enlarging the end of a plastics pipe (22) and forming a belled socket with an annular seal pocket therein, the assembly being characterised by

a) a frame (24);

b) socket moulding means mounted on the frame and comprising:

1) a lip mould (54) attached to the frame (24) and having an outer surface configured and dimensioned for coaxial engagement with the pipe to enlarge and mould the lip thereof,

2) a base mould (56) mounted coaxially with the lip mould (54) for coaxial engagement with the pipe and having an outer surface configured and dimensioned to enlarge and mould the base of a socket therein, and

3) a plurality of form block segments (58) mounted between the lip mould (54) and the base mould (56) and slidably engaging the end surfaces thereof, the form block segments (58) being configured and dimensioned to move radially outwardly from a first position to a second position when pressed between the lip mould (54) and the base mould (56), the form block segments being recessed within the area defined by a geometrical extension of the outer surface of the lip mould when in the first position, and forming a continuous annular bead configured to mould an annular seal pocket in the socket of the pipe when in the second position;

c) shifting means (62) mounted on the frame and extending through the lip mould (54) and carrying the base mould (56), the shifting means (62) being operable to reciprocate the base mould (56) axially relative to the lip mould (54), to vary the distance between the lip mould and the base mould, thus being operable, upon decreasing the distance between the lip mould and the base mould, to press the form block segments (58) between the lip mould (54) and the base mould (56) causing the form block segments to move radially outwardly from the first position to the second position; and

d) retracting means (68) engaging the form block segments (58) for retracting the form block segments from the second position to the first position when the distance between the lip mould (54) and the base mould

0099151

-20-

(56) is increased by operation of the shifting means.

2. A belling mandrel assembly as in Claim 1, characterised in that the frame comprises a stationary support (24), pipe clamping means (42, 46, 48) mounted on the support (24) for holding the pipe (22) to be moulded in a position for engagement by the socket moulding means (54, 56, 58), and drive means (26) for advancing the socket moulding means into engagement with the pipe.

3. A belling mandrel assembly as in Claim 2, characterised in that the drive means (26) is attached to both the lip mould (54) and the base mould (56) via the shifting means (62), and further comprising stop means (32, 40) for stopping the advancement of the base mould (56) while continuing advancement of the lip mould (54) thereby varying the relative distance between the lip mould and the base mould.

4. A belling mandrel assembly as in any one of Claims 1 to 3, characterised in that the lip mould (54) and the base mould (56) are of similar outer configuration and dimension.

5. A belling mandrel assembly as in any one of Claims 1 to 4, further characterised by pilot means (60) attached to the base mould (56) and being substantially of the internal diameter of the pipe (22), for piloting the belling mandrel assembly (20) into the pipe.

6. A belling mandrel assembly as in any one of Claims 1 to 5, characterised in that each of the form block segments (58) comprises a section of an annular ring, each of the segments having radial sides angled with respect to the longitudinal axis forming a compound wedge-shaped section.

7. A belling mandrel assembly as in any one of Claims 1 to 6, characterised in that each of the form block segments (58) is configured and dimensioned substantially similarly.

8. A belling mandrel assembly as in any one of Claims 1 to 7, characterised in that each of the form block segments (58) has a substantially smooth arcuate outside surface, the curve of the surface being continuous with the outside surfaces of the lip mould (54) and the base mould (56) when the form block segments are in their second position.

9. A belling mandrel assembly as in any one of Claims 1 to 8, characterised in that the retracting means comprises a plurality of right-angle levers (68) each engaging one of the form block segments (58) and pivoting at its angle inside the socket moulding means, and a spring (76) biasing the lever to move the form block segment (58) towards its retracted first position.

10. A belling mandrel assembly as in Claim 9, further characterised by a spring plate (78) mounted slidably within the socket moulding means and abutting the springs (76) on its one side and the right-angle levers (68) on its other side, the springs being out of alignment with the right-angle levers, the biasing force of the springs being transferred to the right-angle levers through the spring plate.

Fig. 1

Fig. 2

Fig. 3

Fig. 4

Fig. 5

Fig. 6

Fig. 7

Fig. 10

Fig. 8

Fig. 9

Fig. 11